# EUROPEAN PATENT APPLICATION

(11) **EP 4 391 453 A1**
(43) Date of publication of application: **26.06.2024**
(21) Application number: 22306943.6
(22) Date of filing: 19.12.2022
(51) Int. Cl.: H04L 12/10

(54) **IMPROVED NETWORKING APPARATUS FOR PROVIDING ELECTRICAL POWER OVER WIRED DATA TELECOMMUNICATIONS NETWORKS**

(71) Applicant: SCHNEIDER ELECTRIC INDUSTRIES SAS, 92500 Rueil-Malmaison (FR)
(72) Inventor: BRENGUIER, Jérôme, Jean, Sébastien, 38470 L'ALBENC (FR); LAYOUR, Michel, 38350 SAINT LAURENT EN BEAUMONT (FR)
(74) Representative: Lavoix

(57) **Abstract**

A networking apparatus (4) comprising a power distribution bus (29), a plurality of network interface circuits (20, 21, 22) each connected to a powered device, PD, controller (26) and a channel of a power source equipment, PSE, controller arrangement, and electronics circuitry. The PD controller (26) is configured to control supply of electrical power to the bus (29) when one of the network interface circuits is powered by a network (50) in which the networking apparatus is installed or connected to. The PSE controller arrangement comprises either a mutualized PSE controller (28) with a plurality of channels (1, 2, 3) or a plurality of PSE controllers (28) each having a respective channel (1, 2, 3) and is configured to control supply of electrical power from the bus (29) when at least one of the network interface circuits (20, 21, 22) is self-powered and aims to power a remote device through the network. The networking apparatus (4) allows a transfer of data and electrical power between the interface circuits (20, 21,22), each interface circuit (20,21,22) being capable of a bidirectional transmission of data and a selectively monodirectional electrical current over a wired telecommunications network. The PD controller (26), the PSE controller arrangement, the plurality of network interface circuits, and said electronics circuitry are mutually arranged and configured to:
- put or maintain a first interface circuit (20) of the plurality of interface circuits into a powered mode, where the apparatus receives feeding power from the network (50), when a voltage received in input by said first interface (20) circuit exceeds a predefined threshold, and deactivate the channel (1) of the PSE controller arrangement connected to said first interface circuit (20) receiving power preventing flow of power from the power distribution bus towards said network; and, at the same time,
- put or maintain the interface circuits (21, 22) of the plurality of interface circuits other than said first interface circuit (20) in a power supplying equipment mode enabling feeding power to flow from the power bus towards the network.

## Description

### TECHNICAL FIELD

The present invention relates to an improved apparatus for providing electrical power over wired data telecommunications networks, and to a related wired telecommunications network comprising such an apparatus.

### BACKGROUND

Many wired telecommunications networks, such as Ethernet-based networks, can be configured to allow a transmission of electrical power between networking devices connected to the network, e.g. between a power source equipment (PSE) and a powered device (PD), in order to remotely power a networking device.

Electrical power can be transferred throughout the network over the data-carrying physical layer (e.g., Ethernet cables) to which the networking devices are connected.

An example is the "Power over Ethernet" (PoE) technology defined by standards IEEE 802.3af or IEEE 802.3at or IEEE 802.3bt of the Institute of Electrical and Electronics Engineers (IEEE).

EP3873027 A1 discloses systems and methods for transmitting electric power over a wired data telecommunications network. Although the solution therein disclosed is quite effective, there is still room for further improvements, in particular about optimizing the use of its bidirectional ports.

### SUMMARY

The object of the present invention is therefore to provide an improved and more economical networking apparatus capable of providing a reversible electrical flow power over wired data telecommunications networks, and which can be used in a more flexible and, at the same type multiple-functioning operating way.

This object is achieved by a networking apparatus comprising a power distribution bus, a plurality of network interface circuits each connected to a powered device, PD, controller and a channel of a power source equipment, PSE, controller arrangement, and electronics circuitry, wherein the PD controller is configured to control supply of electrical power to the bus when one of the network interface circuits is powered by a network in which the networking apparatus is installed or connected to, wherein the PSE controller arrangement comprises either a mutualized PSE controller with a plurality of channels, or a plurality of PSE controllers each having a respective channel and is configured to control supply of electrical power from the bus when at least one of the network interface circuits is self-powered and aims to power a remote device through the network, the networking apparatus being configured to allow a transfer of data and electrical power between the interface circuits, each interface circuit being capable of a bidirectional transmission of data and a selectively monodirectional electrical current over a wired telecommunications network; the apparatus being characterized in that the PD controller, the PSE controller arrangement, the plurality of network interface circuits, and said electronics circuitry are mutually arranged and configured to:
- put or maintain a first interface circuit of the plurality of interface circuits into a powered mode (PD), where the apparatus receives feeding power from the network, when a voltage received in input by said first interface circuit exceeds a predefined threshold, and deactivate the channel of the PSE controller arrangement connected to said first interface circuit receiving power preventing flow of power from the power distribution bus towards said network; and, at the same time,
- put or maintain the interface circuits of the plurality of interface circuits other than said first interface circuit in a power supplying equipment (PSE) mode enabling feeding power to flow from the power bus towards the network.

According to some embodiments, the networking apparatus according to the invention may comprise one or more of the following features, which may be combined, even partially, in any technical feasible combination:
- each interface circuit comprises:
- a connection portion adapted to connect the interface circuit to the wired telecommunications network;
- a rectifier connected to the bus and the communication portion and comprising a plurality of rectifier elements;
- a voltage sensor connected to the connection portion;
- a first rectifier switch and a second rectifier switch each respectively coupled to a channel of the PSE controller arrangement and configured to selectively prevent electrical current from flowing from the bus to the connection portion;
   the first rectifier switch is connected in parallel with a first rectifier element of the rectifier, and the second rectifier switch is connected in parallel with a second rectifier element of the rectifier;
   the electronics circuitry comprises a PD controller switch operatively coupled to or part of the PD controller and configured to selectively prevent electrical currents from flowing from the connection portion of each interface circuit to the bus, and wherein the networking apparatus is configured to:
- activate the PD controller to close the PD controller switch when the input voltage, received from the voltage sensor at the connection portion of one interface circuit of the plurality of interface circuits receiving electrical power, exceeds a predefined threshold, and
- deactivate the channel of the PSE controller arrangement connected to said one interface circuit to prevent closure of the first and second rectifier switches of the currently powered interface circuit;
   the electronics circuitry further comprises a first resistor which is connected in parallel with the PD controller, and a second resistor which is operatively connected to the PSE controller;
   the PD controller switch is connected between the connection portion of each interface circuit and the power distribution bus;
   the rectifier of each interface circuit is a diode bridge rectifier, wherein the plurality of rectifier elements comprises or is constituted by a plurality of diodes;
   the rectifier of each interface circuit comprises a first input terminal and a second input terminal, and a first output terminal and a second output terminal, wherein the cathode of the first diode of each interface circuit is connected to the corresponding first output terminal and the anode of each first diode is connected to the corresponding first input terminal, and wherein the cathode of the second diode of each interface circuit is connected to the second input terminal and the anode of each second diode is connected to the corresponding second output terminal;
   the first rectifier switch, and/or the second rectifier switch, and/or the PD controller switch are electrical switches, or transistor-based switches, such as Mosfets or Insulated Gate Bipolar transistors or bipolar transistors;
   the PSE controller arrangement is configured to close the first switch and the second switch of one of the plurality of interface circuits when the power distribution bus has excess power that can be delivered to a remote device through the network;
   the PD controller is configured to be automatically switched into a low power consumption mode when the PSE controller arrangement is attempting to determine electrical properties of a remote load.

The above object is also achieved by a wired telecommunications network, such as an Ethernet network, comprising a plurality of networking apparatuses, wherein at least one networking apparatus is as above indicated, and in particular as defined in the appended claimed.

In particular, the wired telecommunications network has a closed ring topology, such as a closed daisy chain topology.

### BRIEF DESCRIPTION OF THE DRAWINGS

The invention will be better understood upon reading the following description, provided solely as an example, and made in reference to the appended drawings, in which:
Fig. 1 is a simplified diagram of an exemplary wired telecommunications network comprising a plurality of networking devices;
Fig. 2 is a simplified electrical schematic diagram of a networking apparatus according to the invention;
Fig. 3 and Fig. 4 are flow diagrams schematically illustrating modes of operation of a network apparatus according to the invention.

### DETAILED DESCRIPTION

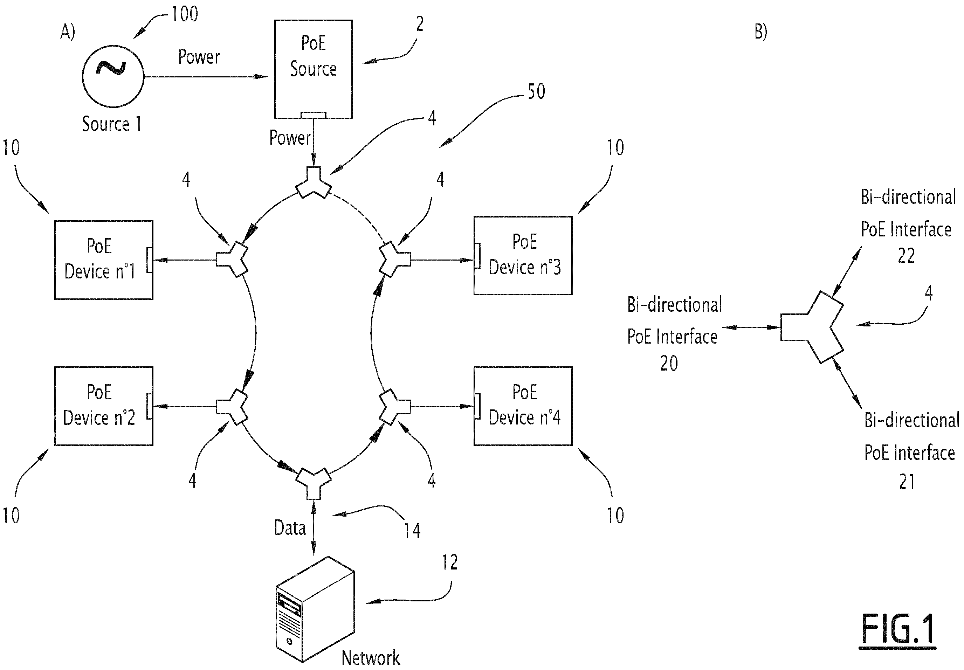

Figure 1 illustrates, on its insert A), an exemplary wired telecommunications network 50 comprising a plurality of network devices.

For example, the network is an Ethernet network, preferably a "Power over Ethernet" (PoE) compliant Ethernet network, e.g. as defined by IEEE standards 802.3af, IEEE 802.3at or IEEE 802.3bt.

The network comprises a plurality of networking apparatuses 4 according to the present invention, for example connected to each other by means of wired links, such as cables, e.g. twisted pair Ethernet cables, such as CAT 5e or CAT6e Ethernet cables.

In the illustrated example, the network comprises several different types of network devices, such as one or more of the following:
- PoE-compliant network devices 10;
- Ethernet-only network devices 12,
- power sourcing equipment 2 powered by an external power source ("Source 1").

For example, the network device 12 comprises a router or a gateway able to connect the network to another telecommunications network, such as a Local Area Network (LAN) or the World Wide Web.

In another example, the network devices 12 may comprise a classical Ethernet interface suitable only for transferring data (data-only Ethernet link 14) and not for transferring electrical power to supply a remote networking device.

The power sourcing equipment 2 may be configured solely to supply power coming from the external power source, i.e. to allow only a power flow directed towards the network.

The external power source (Source 1) may be an AC (Alternating Current) power source 100, such as a mains power grid or an electrical generator or a battery coupled to an inverter, among other options.

Each of said network devices includes or may be connected to a networking apparatus 4 according to the invention.

The network devices may be computers, mobile communication devices, wireless access points, sensors, cameras, multimedia devices, industrial control devices, data routing and/or switching equipment, such as a network interface device, or the like.

In some cases, some network devices, such as devices 10 may be connected to a networking apparatus 4 through a power-only connection link (i.e., a wired connection suitable to transfer electrical power but not data) and/or through a data-only connection link (i.e., a wired connection suitable to transfer data but not electrical power).

Each networking apparatus 4 comprises at least one PoE-compliant bidirectional network circuit interface, and preferably comprises two or more of such bidirectional network circuit interfaces, e.g. three circuit interfaces 20, 21 and 22 as shown on insert B) of Figure 1.

In many embodiments, networking apparatuses 4 according to the invention can be used as building blocks to build a network with a specific topology, such as a ring topology or a closed loop topology, preferably a closed daisy chain loop.

For example, the networking apparatuses 4 are connected to each other by wired links suitable for transferring data along with electrical power.

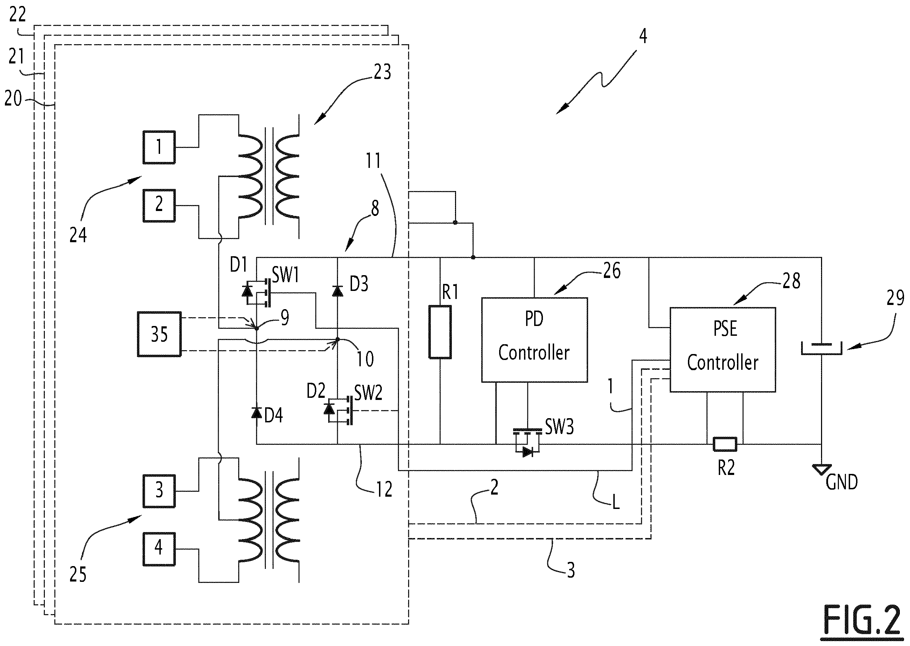

In particular, as it will be described in more details in the following by reference to a possible embodiment schematically illustrated in figure 2, the networking apparatus 4 according to the invention comprises a power distribution bus, a plurality of network interface circuits each connected to a powered device, PD, controller and a channel of a power source equipment, PSE, controller arrangement, and electronics circuitry or means common to and shared by the various interface circuits.

In particular, the PD controller is configured to control supply of electrical power to the bus when one of the network interface circuits is powered by an external network, such as the network 50, in which the networking apparatus 4 is installed or connected to.

The PSE controller arrangement comprises either a mutualized or centralized PSE controller, common to all interface circuits, with a plurality of channels, or a plurality of individual PSE controllers each having a respective channel connected to the corresponding interface circuit.

As a whole, the networking apparatus according to the invention is configured to allow a transfer of data and electrical power between the interface circuits, wherein each interface circuit is capable of a bidirectional transmission of data and a selectively monodirectional electrical current over a wired telecommunications network.

Usefully, in the networking apparatus 4 according to the invention the PD controller, the PSE controller arrangement, the commonly shared electronics circuitry, and the plurality of network interface circuits are mutually arranged and configured to:
- put or maintain a first interface circuit of the plurality of interface circuits into a powered mode (PD) where the apparatus 4 receives feeding power from an external network, when a voltage received in input by said first interface circuit exceeds a predefined threshold, and deactivate the channel of the PSE controller arrangement connected to said first interface circuit receiving power preventing flow of power from the power distribution bus towards said external network; and, at the same time,
- put or maintain the interface circuits of the plurality of interface circuits other than said first interface circuit in a power supplying equipment (PSE) mode enabling feeding power to flow from the power distribution bus 29 of the apparatus 4 towards the external network.

As above indicated, one exemplary embodiment of a networking apparatus 4 according to the invention is schematically represented in Figure 2.

As illustrated therein illustrated, the networking apparatus 4 comprises a plurality of "bidirectional" network interface circuits, a single or centralized power device (PD) controller 26, and a power source equipment, PSE, controller arrangement.

Further, the networking apparatus 4 may comprise or be associated to a single or centralized power source equipment not illustrated in figure 2.

Usefully, the networking apparatus 4 is configured to allow a transfer of data and electrical power between the interface circuits, wherein each interface circuit is capable of a bidirectional transmission of data and a selectively monodirectional electrical current over a wired telecommunications network 50.

In practice, the electrical supply transmitted via each bidirectional interface circuit is monodirectional with the direction being selectively reversible.

In the exemplary embodiment illustrated there are represented three bidirectional interface circuits 20, 21, 22; clearly, the number of interface circuits may be suitably varied according to the applications.

The PSE controller arrangement comprises either a mutualized PSE controller with a plurality of channels or a plurality of PSE controllers 28, each having a respective channel.

Each of the plurality of network interface circuits 20, 21, 22 is connected to the PD controller 26 and to a channel of the PSE arrangement.

In the exemplary embodiment of figure 2, the illustrated PSE controller arrangement comprises a mutualized or centralized PSE controller 28; the plurality of channels are schematically indicated with the reference number 1 along the represented line L for the channel associated with the interface circuit 20, and with the reference numbers 2 and 3 for the corresponding channels (only one portion of which is visible in figure 2) associated with the second and third interface circuit 21 and 22, respectively.

Conveniently, the single PD controller 26 is configured to control supply of electrical power to a bus 29 of the apparatus 4 when one of the network interface circuits 20, 21, 22 is powered by a network 50 along which the apparatus itself is installed or connected to.

The PSE controller arrangement is configured to control supply of electrical power from the bus 29 when at least one of the network interface circuits is self-powered and aims to power a remote device through the network 50.

The controllers may comprise electronic circuitry, such as a processor (e.g., a microcontroller) and a computer readable storage medium such as a computer memory (e.g., read-only memories, electrically erasable and programmable read only memories, flash memory, or any other type of media suitable for storing electronic instructions).

The computer readable storage medium may store executable machine code and/or software code causing the processor to implement one or more of the above method steps when executed by the processor.

In other embodiments, the controllers may be implemented differently and may include application specific integrated circuits (ASIC), or programmable circuits such as field programmable gate arrays (FPGA), or equivalents thereof, and more generally any circuit or processor capable of executing the functions described herein.

As above indicated, in the exemplary embodiment of figure 2 there are schematically represented three bidirectional interface circuits 20, 21, 22 out of which, for ease of illustration, only the electrical schematic diagram of the network interface circuit 20 is represented in details.

Thus, the electrical schematic diagram of the network interface circuit 20 will be described hereinafter, and what is described in relation to the bidirectional interface circuit 20 has to be understood as applicable to any other interface circuit of the networking apparatus 4, such as to the interface circuits 21, 22.

The interface circuit 20 is adapted to be connected to a wired data telecommunication network, such as an Ethernet-based network 50 illustrated in figure 1.

For example, the interface circuit 20 may be connected to a data-carrying physical layer of said network (e.g., one or more cables, such as twisted pair Ethernet cables) through a dedicated connector.

The interface circuit 20 is configured to allow a transmission of electrical power over the network data physical layer.

Preferably, the interface 20 allows a bidirectional transmission of electrical power to and from the network.

For example, the interface 20 can be switched between a supply mode, in which it supplies electric power to the network, and a powered mode, in which the interface 20 receives electrical power from the network.

For example, in the supply mode, the electric power transferred by the interface 20 to the network (e.g., to power a remote network device) comes from the networking apparatus 4 incorporating the interface circuit 20.

The networking apparatus 4 is then acting as a power source equipment (PSE).

In the powered mode, the electric power received by the circuit interface 20 from the network may be used to power a network device 10, 12 of which the apparatus 4 is part of or is connected to.

The networking apparatus 4 is then acting as a powered device (PD).

The interface circuit 20 comprises a connection or communication portion, an electrical circuit, and coupling elements 23 that are suitable for connecting the connection portion to the electrical circuit of the interface circuit 20 and to a data processing portion of the apparatus 4 to which the interface circuit 20 belongs to.

The connection portion is able to connect the interface circuit 20 to a wired telecommunications network, such as the network 50.

In many embodiments, the connection portion comprises an electrical connector suitable to be connected to the wired telecommunications network.

In the illustrated embodiment, the connector comprises a first pair of pins at the connection portion 24 and a second pair of pins at the connection portion 25. The connection portion(s) may also include other pins not shown in the figure. Each pair of pins is adapted to be coupled to a pair of twisted cables.

As visible in the example, the pins may follow the pin numbering scheme described in the ANSI/TIA-568 standard.

The pins of the first pair of pins at the connection portion 24 may correspond to pins "1" and "2" while the pins of the second pair of pins at the connection portion 25 may correspond to pins "3" and "4".

The coupling elements 23 are configured to demodulate the incoming electrical signals received from the network in order to extract data signals and forward them to the data processing portion of the device, while forwarding the base signals to the electrical circuit.

Similarly, the coupling elements 23 are configured to modulate outgoing signals and forward them towards the connection portion.

For example, the coupling elements 23 are magnetic coupling elements comprising a voltage transformer.

In the illustrated embodiment, the interface circuit 20 comprises at least two such coupling elements 23.

In one exemplary embodiment, a first coil is connected to the pins of a pair of pins at the connection portions 24, 25 and to an input terminal of the electrical circuit.

A second coil, magnetically coupled to the first coil, is connected to the data processing portion. In other embodiments, the coupling elements may include capacitors.

In one possible example, the interface circuit 20 is provided with a voltage sensor, schematically represented in figure 2 by the reference number 35.

The definition of voltage sensor has to be interpreted hereby in the broadest sense possible and encompasses any voltage assembly/detector formed by one or more devices/components configured to detect the voltage of feeding power applied to the interface circuit 20.

In the exemplary embodiment illustrated in figure 2, the voltage sensor is operatively connected to the connection portions 24, 25, and in particular is illustrated positioned between the connection portions 24, 25 and the rectifier 8.

The interface circuit 20 further comprises a rectifier, indicated by the reference number 8, which is connected to the bus 29 and the connection portion 24, 25, and comprises a plurality of rectifier elements.

In one possible example, the rectifier 8 is constituted by or comprises a diode rectifier bridge comprising a plurality of diodes, e.g. semiconductor diodes, arranged in a conventional fashion.

For reason of simplicity the examples described will refer to diodes, which however may also be replaced by switches such as Mosfets as this allows to reduce losses in the diode rectifier. In that case, the switches may be connected also in a bridge arrangement.

The following description made with reference to diode-based rectifiers can be transposed to alternative embodiments in which the diodes are replaced by rectifier elements such as switches, especially semiconductor-based switches, such as Mosfets.

In the exemplary embodiment illustrated in figure 2, the rectifier 8 comprises four diodes D1, D2, D3 and D4.

The rectifier 8 is connected to the connection portion 24, 25 through first and second input terminals 9 and 10. For example, the first input terminal 9 is connected to the first pair of pins at the connection portion 24, and the second input terminal 10 is connected to the second pair of pins at the connection portion 25. The rectifier 8 comprises a first output terminal 11 and a second output terminal 12.

In one possible embodiment, the voltage sensor 35 is operatively connected at the first input terminal 9 and the second input terminal 10 as schematically depicted in figure 2 and detects the voltage in input to the rectifier 8.

According to the exemplary embodiment of figure 2, the rectifier 8 comprises, as above indicated a first diode D1, a second diode D2, a third diode D3 and a fourth diode D4.

The cathode of the first diode D1 is connected to the first output terminal 11 and the anode of the first diode D1 is connected to the first input terminal 9.

The second diode D2 is connected between the second output terminal 12 and the second input terminal 10 with its cathode connected to the second input terminal 10.

The third diode D3 is connected between the first output terminal 11 and the second input terminal 10 with its cathode connected to the first output terminal 11.

The fourth diode D4 is connected between the second output terminal 12 and the first input terminal 9 with its cathode connected to the first input terminal 9.

This configuration may be used in embodiments where diodes are replaced by switches such as Mosfets.

The PD controller 26 and the mutualized PSE controller 28 are connected between the rectifier 8 and the internal power distribution bus 29, e.g. a DC power distribution bus.

For example, the first output terminal 11 is connected to a first point of the power distribution bus 29 and the second output terminal 12 is connected to a second point of the power distribution bus 29.

This second point may be connected to an electrical ground point (GND).

The electrical circuit is configured to selectively connect the connection portion to a power supply unit, or an internal power distribution bus, or any device configured to deliver electrical power to internal elements of the device, said device being connected to the internal power distribution bus 29.

As indicated, the PD controller 26 is configured in particular to control the supply of power from the network to the power distribution bus 29 when the apparatus 4 is powered by the network.

The PSE controller 28 is configured in particular to control the supply of power from the power distribution bus 29 to the external network when the apparatus 4 is self-powered and aims to power a remote device through the external network.

In many embodiments, the PD controller 26 and the PSE controller 28 are electronic controllers implemented by electronic circuitry and/or by processor-based control devices.

PD controllers 26 and PSE controllers 28 are well known in the art and their specifications are described in the aforementioned IEEE standards, and for this reason they are not described in further details herein.

In one possible embodiment, the electronics circuity of the networking apparatus 4 comprises a first resistor R1 and a second resistor R2.

In one exemplary embodiment, the first resistor R1 is connected in parallel with the rectifier 8. Corresponding input terminals of the PD controller 26 are connected in parallel with the first resistor R1. In some embodiments, the first resistor R1 may be part of or integrated with the PD controller 26, in accordance with IEEE standards.

In particular, the value of the first resistor R1 determines the class of the PD controller 26 according to IEEE standards.

In the illustrated example, the PD controller 26 is connected to the output of the rectifier bridge and the PSE controller 28 is connected to the power distribution bus 29.

In one possible example, the second resistor R2 is coupled to the PSE controller 28 and is suitable for measuring the current delivered by the PSE controller 28 to the downstream PD equipment.

For example, the second resistor R2 is connected in series between the second output terminal 12 and the power distribution bus 29 and is connected to input pins of the PSE controller 28.

In some embodiments, the second resistor R2 may be part of or integrated with the PD controller 26, in accordance with IEEE standards.

Conveniently, in the networking apparatus 4 according to the present invention, the interface circuit 20 comprises a plurality of switches, and in particular at least a first rectifier switch SW1 and a second rectifier switch SW2, and the commonly shared electronics further comprises a third PD controller switch SW3.

Each of the first and second rectifier switches SW1 and SW2 are coupled to a respective channel of the PSE controller arrangement and is configured to selectively prevent electrical current from flowing from the bus 29 to the connection portion 24, 25.

In general, the first switch SW1 is connected in parallel with a rectifier element (such as the diode D1 in the present example, or the internal diode of the first switch SW1 may form said diode of the rectifier) between the first output terminal 11 and (depending on where the second switch SW2 is connected) the first input terminal 9 or the second input terminal (i.e., the first switch SW1 is not connected to the same input terminal as the second switch SW2).

In particular, as illustrated in the embodiment of figure 2, the first rectifier switch SW1 is connected in parallel with a first rectifier element, and in particular with the first diode D1 of the rectifier 8.

The first switch SW1 can be switched by the PSE controller arrangement between an open state and a closed state. In the open state, the power distribution bus 29 is prevented from supplying power to the network, although power can flow in the reverse direction, i.e. from the network to the power distribution bus 29.

The first switch SW1 may be an electromechanical switch, or a relays, or an electrical switch, or a transistor-based switch, such as a Mosfet or an Insulated Gate Bipolar transistor or equivalent technologies, or a bipolar transistor, or any semiconductor-based switch.

The interface 20 further comprises a second switch SW2 coupled to the PSE controller 28 and connected in parallel with a diode of the rectifier.

In general, also the second switch SW2 is connected in parallel with a rectifier element (such as a diode in the present example) between the second output terminal and either the first input terminal or the second input terminal (as in the illustrated example).

According to the exemplary embodiment illustrated, the second switch SW2 is connected in parallel with the second diode D2 of the rectifier bridge 8 (or the internal diode of the second switch SW2 may form said third diode).

The switch SW2 can be switched, by the PSE controller arrangement, between an open state and a closed state. In the open state, the power distribution bus 29 is prevented from supplying power to the network, although power can flow in the reverse direction, i.e. from the network to the power distribution bus 29.

The second switch SW2 may be an electrical switch, or a transistor-based switch, such as a Mosfet or an Insulated Gate Bipolar transistor, or a bipolar transistor, or any semiconductor-based switch. Mosfet or other semiconductor technology is preferred, in line with IEEE standards, as this allows the switch in case of short circuit to operate in linear mode and limit the output. Preferably, the switch SW2 is a protection switch.

The PSE controller 28 is configured to close the first switch SW1 and/or the second switch SW2 when the power distribution bus 29 has excess power that can be delivered to a remote device through the network 50.

Conveniently, in the networking apparatus 4 according to the present invention, the PD controller switch SW3, which is operatively coupled to or is part of the PD controller 26, is configured to selectively prevent electrical currents from flowing from the connection portion 24, 25 of the respective interface circuit, e.g. the interface circuit 20, to the bus 29, and the networking apparatus 4 is configured to:
- activate the PD controller 26 to close the PD controller switch SW3 when the input voltage, received from the voltage sensor 35 at the connection portion of one interface circuit (e.g. the interface circuit 20) of the plurality of interface circuits 20, 21, 22, receiving electrical power, exceeds a predefined threshold, and
- deactivate only the channel, e.g. the channel 1, of the PSE controller arrangement of the powered interface circuit, e.g. the interface circuit 20, to prevent closure of the first and second rectifier switches SW1, SW2 of the rectifier 8 of the powered interface circuit 20.

The third switch SW3 can be switched by the PD controller 26 between an open state and a closed state. In the open state, the third switch SW3 prevents electrical currents from flowing between the connection portion and the power distribution bus 29.

In the illustrated example, the third switch SW3 is for instance connected between the bus 29 and the rectifier.

In this way, if the PSE controller arrangement of the apparatus 4 uses a single mutualized PSE controller 28 only the channel associated to the currently powered interface circuit is deactivated, while the other channels associated to the other interface circuit of the apparatus 4 can remain active in a power supplying equipment mode.

Likewise, if the PSE controller arrangement of the apparatus 4 uses a PSE controller 28 for each of the interfaces circuits, only the channel associated to the PSE controller 28 of the currently powered interface circuit is deactivated.

In practice, the apparatus 4 according to the invention is advantageously configured to function in a powered-device, PD, mode at one of its circuit interfaces, e.g. in the example above illustrated the interface circuit 20 which feeds the apparatus 4 via the power provided by the external network 50, while it functions in a power supply equipment, PSE, mode at the other interfaces, such as the illustrated circuit interfaces 21 and 22.

According to several embodiments, the third switch SW3 may be an electromechanical switch, or a relay, or an electrical switch, or a transistor-based switch, such as a Mosfet or an Insulated Gate Bipolar transistor, or a bipolar transistor, any semiconductor-based switch.

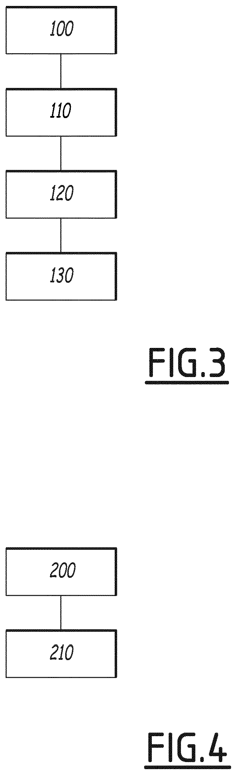

Figures 3 and 4 illustrate two possible examples of a first operation mode and of a second operation mode of a networking apparatus 4 according to the present invention.

For example, in the first operation mode the networking apparatus is not electrically powered by itself and has to be powered by the network 50 through any of the interface circuit 20, 21, 22.

Initially, for instance there is no voltage on the power distribution bus 19.

At step S100, an electrical voltage is applied to any of the interface circuits 20, or 21 or 22.

For example, a remote network device (e.g., a Power Sourcing Equipment) is connected to and supplies electrical power, and electrical current flows through the first resistor R1 and through the sensing input lead of the PD controller 26.

The value of the current flowing through the resistor R1 is used to determine the class of any device that may be powered.

When (step S110) the input voltage exceeds a predefined threshold, the PD controller 26 closes the third switch SW3 and allows electrical currents flowing towards the power distribution bus 29.

In other words, the PD controller 26 is configured to close the third switch SW3 only when the input voltage received at the connection portion of the relevant interface circuit, for example the interface circuit 20, exceeds a predefined threshold.

Then, at step 120 the PD controller 26 deactivates the channel 1 (or 2, or 3) of the PSE controller arrangement corresponding to the powered interface circuit 20 (or 21 or 22).

In this way, closure of the first and second rectifier switches SW1, SW2 of the rectifier 8 of the powered interface circuit 20 (or 21 or 22) is prevented.

At step S130, electrical currents can now flow throughout the powered interface circuit and can reach the power distribution bus 29, which is thus energized.

The local device associated to the powered interface circuit can be now electrically powered.

Figure 4 illustrates an example of a second operation mode of the networking apparatus 4.

For example, in this second operation mode, the networking apparatus may attempt to supply power to a remote load connected to the network 50 through one of the interface circuits 20, 21, 22.

Initially, the power distribution bus 29 is powered by a local power source; the PSE controller arrangement is also powered by the local power source.

At this stage, the first and second switches SW1 and SW2 of each interface circuit are open.

Thus, electrical currents are prevented from flowing from the power distribution bus 29 to the respective connection portion 24, 25.

At step S200, the PSE controller arrangement closes the switches SW1 and SW2.

Electrical currents can now flow from the power distribution bus 29 to the connection portions 24, 25.

At step 210, the PSE controller arrangement initiates a method to provide electrical power to the network 50.

For example, this method may include steps to determine electrical properties of the one or more remote devices to be powered, to ensure that the remote device can receive electrical power and to assess how much electrical power should be delivered to the network.

This method may be performed in accordance with the PoE signature detection processes and source processes described in the IEEE standard 802.3af, 802.3at or 802.3bt.

Clearly, the definition of "put or maintain" previously used depends on the initial state or mode of each interface circuits depending on the applications.

In one possible embodiment of the apparatus 4 according to the invention, by default, the bi-directional interface circuits are in a load mode, meaning the PD controller 26 is ON and the PSE controller arrangement is OFF (or the respective PSE controllers are OFF).

When it is determined that an interface circuit may operate as a source, the PD controller 26 is switched OFF, or at least in low power/no consumption mode, and the third switch SW3 in closed.

Then the PSE controller arrangement is switched ON and power is provided via the interface circuit 20 (or 21 or 22) by controlling the first switch SW1 and the second switch SW2 and monitoring output voltage and current as described in IEEE standard.

In order to return to load mode, the opposite procedure is performed: switching the PSE controller arrangement OFF, switching the first switch SW3 to open and switching the PD controller 26 ON.

In some optional embodiments, the PD controller 26 may be automatically switched into a low power consumption mode when the PSE controller arrangement is attempting to determine electrical properties of a remote load to be possibly powered (e.g., during the detection and classification steps of remote loads). By doing so, the electrical current consumption of the PD controller 26 is temporarily reduced and the detection and classification process thus yields a more accurate result.

The embodiments and alternatives described above may be combined with each other in order to generate new embodiments of the invention.

## Claims

1. A networking apparatus (4) comprising a power distribution bus (29), a plurality of network interface circuits (20, 21, 22) each connected to a powered device, PD, controller (26) and a channel of a power source equipment, PSE, controller arrangement, and electronics circuitry, wherein the PD controller (26) is configured to control supply of electrical power to the bus (29) when one of the network interface circuits (20, 21, 22) is powered by a network (50) in which the networking apparatus (4) is installed or connected to, wherein the PSE controller arrangement comprises either a mutualized PSE controller (28) with a plurality of channels (1, 2, 3) or a plurality of PSE controllers (28) each having a respective channel (1, 2, 3) and is configured to control supply of electrical power from the bus (29) when at least one of the network interface circuits (20, 21, 22) is self-powered and aims to power a remote device through the network, the networking apparatus (4) being configured to allow a transfer of data and electrical power between the interface circuits (20, 21,22), each interface circuit (20,21 ,22) being capable of a bidirectional transmission of data and a selectively monodirectional electrical current over a wired telecommunications network;
the apparatus (4) being **characterized in that** the PD controller (26), the PSE controller arrangement, the plurality of network interface circuits (20, 21, 22), and said electronics circuitry are mutually arranged and configured to:
- put or maintain a first interface circuit (20) of the plurality of interface circuits into a powered mode (PD), where the apparatus (4) receives feeding power from the network (50), when a voltage received in input by said first interface (20) circuit exceeds a predefined threshold, and deactivate the channel (1) of the PSE controller arrangement connected to said first interface circuit (20) receiving power preventing flow of power from the power distribution bus (29) towards said network (50); and, at the same time,
- put or maintain the interface circuits (21, 22) of the plurality of interface circuits other than said first interface circuit (20) in a power supplying equipment (PSE) mode enabling feeding power to flow from the power bus (29) towards the network (50).

2. The networking apparatus (4) according to claim 1, wherein each interface circuit (20, 21, 22) comprises:
- a connection portion (24, 25) adapted to connect the interface circuit (20, 21, 22) to the wired telecommunications network;
- a rectifier (8) connected to the bus (29) and the communication portion (24, 25) and comprising a plurality of rectifier elements;
- a voltage sensor (35) connected to the connection portion (24, 25);
- a first rectifier switch (SW1) and a second rectifier switch (SW2) each respectively coupled to a channel (1, 2, 3) of the PSE controller arrangement and configured to selectively prevent electrical current from flowing from the bus (29) to the connection portion (24, 25).

3. The networking apparatus (4) according to claim 2, wherein the first rectifier switch (SW1) is connected in parallel with a first rectifier element (D1) of the rectifier (8), and the second rectifier switch (SW2) is connected in parallel with a second rectifier element (D2) of the rectifier (8).

4. The networking apparatus (4) according to one or more of the previous claims, wherein said electronics circuitry comprises a PD controller switch (SW3) operatively coupled to or part of the PD controller (28) and configured to selectively prevent electrical currents from flowing from the connection portion (24, 25) of each interface circuit (20, 21, 22) to the bus (29), and wherein the networking apparatus (4) is configured to:
- activate the PD controller (28) to close the PD controller switch (SW3) when the input voltage, received from the voltage sensor (35) at the connection portion of one interface circuit (20) of the plurality of interface circuits (20, 21, 22) receiving electrical power, exceeds a predefined threshold, and
- deactivate the channel (1) of the PSE controller arrangement connected to said one interface circuit (20) to prevent closure of the first and second rectifier switches (SW1, SW2) of the currently powered interface circuit (20).

5. The networking apparatus (4) according to claim 4, wherein said electronics circuitry further comprises a first resistor (R1) which is connected in parallel with the PD controller (26), and a second resistor (R2) which is operatively connected to the PSE controller (28).

6. The networking apparatus (4) according to claim 4 or 5, wherein the PD controller switch (SW3) is connected between the connection portion (24, 25) of each interface circuit (20, 21, 22) and the power distribution bus (29).

7. The networking apparatus (4) according to one or more of claims 2 to 5, wherein the rectifier (8) of each interface circuit (20, 21, 22) is a diode bridge rectifier (8), wherein the plurality of rectifier elements comprises or is constituted by a plurality of diodes (D1, D2, D3, D4).

8. The networking apparatus (4) according to claim 7, wherein the rectifier (8) of each interface circuit (20, 21, 22) comprises a first input terminal (9) and a second input terminal (10), and a first output terminal (11) and a second output terminal (12), wherein the cathode of the first diode (D1) of each interface circuit (20, 21, 22) is connected to the corresponding first output terminal (11) and the anode of each first diode (D1) is connected to the corresponding first input terminal (9), and wherein the cathode of the second diode (D2) of each interface circuit (20, 21, 22) is connected to the second input terminal (10) and the anode of each second diode (D2) is connected to the corresponding second output terminal (12).

9. The networking apparatus (4) according to one or more of the previous claims, wherein the first rectifier switch (SW1), and/or the second rectifier switch (SW2), and/or the PD controller switch (SW3) are electrical switches, or transistor-based switches, such as Mosfets or Insulated Gate Bipolar transistors or bipolar transistors.

10. The networking apparatus (4) according to any one of the previous claims, wherein the PSE controller arrangement is configured to close the first switch (SW1) and the second switch (SW2) of one of the plurality of interface circuits (20, 21, 22) when the power distribution bus (19) has excess power that can be delivered to a remote device through the network.

11. The networking apparatus (4) according to any one of the previous claims, wherein the PD controller (26) is configured to be automatically switched into a low power consumption mode when the PSE controller arrangement is attempting to determine electrical properties of a remote load.

12. A wired telecommunications network (50), such as an Ethernet network, comprising a plurality of networking apparatuses (4), wherein at least one networking apparatus is according to any one of the previous claims.

13. The wired telecommunications network (50) of claim 12, wherein the network has a closed ring topology, such as a closed daisy chain topology.
